# FASCICULE DE BREVET EUROPEEN

(11) **EP 2 922 183 B1**
(45) Date de publication et mention de la délivrance du brevet: **27.02.2019**
(21) Numéro de dépôt: 15159791.1
(22) Date de dépôt: 19.03.2015
(51) Int. Cl.: H02K 5/167, H02K 5/24

(54) **Actionneur électromécanique, installation domotique associée et procédé de fabrication d'un tel actionneur**
Elektromechanisches Betätigungselement, zugeordnet Domotik-Installation und Herstellungsverfahren.
Electromechanical actuator, asociated domotic installation and manufacturing process of said actuator.

(30) Priorité: 20.03.2014 FR 1452319
(43) Date de publication de la demande: 23.09.2015
(73) Titulaire: SOMFY ACTIVITES SA, 74300 Cluses (FR)
(72) Inventeur: Roger, Michel, 74300 CLUSES (FR); Gilet, Fabrice, 74700 SALLANCHES (FR); Magli, Denis, 74440 TANINGES (FR); Brion, Pierre, 74300 CHATILLON SUR CLUSES (FR); Girola, Fabrizio, 74250 Viuz-en-Sallaz (FR)
(74) Mandataire: Lavoix

(56) Documents cités:
- EP-A1- 1 713 159
- WO-A1-2013/050722
- DE-A1- 19 630 030
- US-A1- 2012 098 358
- US-A1- 2014 054 996

## Description

La présente invention concerne un actionneur électromécanique comprenant un moteur électrique, ainsi qu'une installation domotique de fermeture ou de protection solaire comprenant un tel actionneur, et un procédé de fabrication d'un tel actionneur.

De manière générale, la présente invention concerne le domaine des dispositifs d'occultation comprenant un dispositif d'entraînement motorisé mettant en mouvement un écran entre au moins une première position et une deuxième position.

Un dispositif d'entraînement motorisé comprend un actionneur électromécanique d'un élément mobile de fermeture, d'occultation ou de protection solaire tel qu'un volet, une porte, une grille, un store, ou tout autre matériel équivalent, appelé par la suite écran.

On connaît déjà le document EP 1 420 502 qui décrit un moteur électrique à courant continu sans balais à commutation électronique comprenant un rotor et un stator positionnés de manière coaxiale autour d'un axe de rotation.

Le rotor comprend un arbre de rotor. Une première extrémité de l'arbre de rotor est supportée par un premier palier. Et une deuxième extrémité de l'arbre de rotor est supportée par un deuxième palier.

Le stator comprend un corps de stator et un noyau de stator. Le corps de stator comprend un premier logement annulaire à l'intérieur duquel est disposé le premier palier, et un deuxième logement annulaire à l'intérieur duquel est disposé le deuxième palier.

Le premier palier comporte un organe de roulement, l'organe de roulement étant un roulement à aiguilles. Le deuxième palier comporte un organe de roulement, l'organe de roulement étant un roulement à billes.

Les premier et deuxième paliers sont montés respectivement avec un ajustement serré dans les premier et deuxième logements annulaires du corps de stator.

Cependant, ce moteur électrique présente l'inconvénient de mettre en oeuvre une solution onéreuse au moyen de deux paliers comprenant chacun un organe de roulement.

L'utilisation du premier palier en tant que roulement à aiguilles de faible encombrement est également onéreuse.

En outre, le montage du premier palier à l'intérieur du premier logement annulaire du corps de stator est complexe, étant donné que le premier palier est un roulement à aiguilles où la bague extérieure est montée avec un ajustement serré dans le premier logement annulaire du corps de stator.

Par ailleurs, les tolérances d'assemblage des premier et deuxième paliers dans les premier et deuxième logements annulaires du corps de stator, ainsi que les tolérances de dimensionnement des premier et deuxième logements annulaires et de l'arbre de rotor sont précises pour limiter les contraintes sur l'arbre de rotor, ce qui engendre des coûts de fabrication élevés.

Par conséquent, pour limiter les coûts de fabrication, une solution serait d'utiliser des tolérances d'assemblage et de dimensionnement moins précises.

Néanmoins, lors de l'entraînement en rotation du rotor, un tel assemblage engendre des vibrations provoquées, notamment, par un palier monté peu serré.

On connaît également le document WO-A-2013/050722 qui décrit un moteur d'un type voisin, qui diffère de celui de EP-A-1 420 502 en ce que, les premier et deuxième paliers sont montés serrés dans des logements prévus dans des pièces rapportées sur le stator et distinctes du corps de stator.

La présente invention a pour but de résoudre les inconvénients précités et de proposer un actionneur électromécanique, une installation domotique de fermeture ou de protection solaire comprenant un tel actionneur, ainsi qu'un procédé de fabrication d'un tel actionneur, permettant d'assembler un rotor et un stator d'un moteur électrique au moyen d'au moins un palier en limitant les vibrations du moteur électrique lors de l'entraînement en rotation de l'arbre de rotor tout en minimisant les coûts de fabrication du moteur électrique d'un actionneur électromécanique, ainsi que les contraintes sur l'arbre de rotor.

A cet effet, la présente invention vise, selon un premier aspect, un actionneur électromécanique pour une installation domotique de fermeture ou de protection solaire comprenant un moteur électrique, le moteur électrique comprenant un rotor et un stator positionnés de manière coaxiale autour d'un axe de rotation,
- où le rotor comprend un arbre de rotor, l'arbre de rotor comportant une extrémité supportée par un palier,
- où le stator comprend un noyau de stator et un corps de stator, le corps de stator comprenant un logement annulaire à l'intérieur duquel est disposé le palier.

Selon l'invention, le palier est monté avec un ajustement libre à l'intérieur du logement annulaire du corps de stator, l'ajustement libre étant défini par un premier jeu de fonctionnement axial, ce premier jeu de fonctionnement axial étant réalisé par une différence entre, d'une part, une longueur axiale, mesurée le long de l'axe de rotation, entre une première butée et une deuxième butée du logement annulaire du corps de stator et, d'autre part, une longueur axiale du palier, et un deuxième jeu de fonctionnement radial, le deuxième jeu de fonctionnement radial étant réalisé entre une surface annulaire externe du palier et la surface annulaire du logement annulaire du corps de stator. Un joint élastique annulaire est disposé autour du palier, le joint élastique annulaire étant comprimé entre la surface annulaire du logement annulaire du corps de stator et une surface annulaire externe du palier. Et la première butée du logement annulaire du corps de stator est formée par déformation plastique du corps de stator.

Ainsi, l'actionneur électromécanique comprend un moteur électrique pourvu d'un stator à l'intérieur duquel est mis en rotation un rotor, où le rotor comporte un arbre de rotor supporté par un palier, et où un joint élastique annulaire est monté entre le palier et le logement annulaire recevant le palier, de sorte à limiter les vibrations du moteur électrique lors de l'entraînement en rotation de l'arbre de rotor et à corriger l'alignement de l'arbre de rotor à l'intérieur du corps de stator tout en minimisant les coûts de fabrication du moteur électrique d'un actionneur électromécanique.

De cette manière, le moteur électrique comprend ainsi un logement annulaire du corps de stator à l'intérieur duquel est inséré un palier, où le palier présente des dimensions lui permettant d'être mobile suivant les directions axiale et radiale à l'intérieur du logement annulaire du corps de stator.

En outre, le joint élastique annulaire permet d'amortir la transmission de vibrations entre l'arbre de rotor et le stator, ainsi qu'avec un arbre de sortie du moteur électrique.

De cette manière, l'amortissement des vibrations au moyen du joint élastique annulaire permet de limiter l'usure des éléments constituant l'actionneur électromécanique et de minimiser le bruit engendré par des vibrations au niveau de l'installation domotique.

En outre, le joint élastique annulaire permet de corriger l'alignement entre l'arbre de rotor et le corps de stator.

De cette manière, la correction de l'alignement de l'arbre de rotor au moyen du joint élastique annulaire permet également de limiter l'usure des éléments constituant l'actionneur électromécanique et de minimiser le bruit engendré par des vibrations au niveau de l'installation domotique.

Le joint élastique annulaire monté autour du palier permet de réaliser une liaison de type rotule ente l'arbre de rotor et le logement annulaire du corps de stator.

Ainsi, le joint élastique annulaire monté autour du palier permet à l'arbre de rotor d'être mobile en rotation autour de l'axe de rotation du moteur électrique.

Par ailleurs, la première butée du logement annulaire du corps de stator est réalisée de manière simple, rapide et peu onéreuse.

L'introduction d'un outil à l'intérieur du corps du stator permet de former aisément la première butée suite à l'introduction du palier dans le logement annulaire du corps de stator.

Un tel assemblage permet également de diminuer la précision des tolérances des éléments constituant le moteur électrique, en particulier au niveau du stator et du rotor, de sorte à diminuer le coût d'obtention de celui-ci.

Pratiquement, le corps du stator est réalisé en matière plastique.

Avantageusement, la deuxième butée du logement annulaire du corps de stator est formée par une paroi d'extrémité du logement annulaire du corps de stator.

Préférentiellement, le joint élastique annulaire monté autour du palier est disposé entre un épaulement du palier et une face frontale d'extrémité du palier.

Avantageusement, la première butée du logement annulaire du corps de stator coopère avec un épaulement du palier.

Dans un mode de réalisation, l'arbre de rotor comporte une autre extrémité supportée par un autre palier, l'autre palier comportant un organe de roulement, alors qu'un support comprend un autre logement annulaire à l'intérieur duquel est disposé l'autre palier, le support étant relié au corps de stator.

Avantageusement, le joint élastique annulaire est monté autour du palier avec un ajustement libre.

Selon une caractéristique préférée de l'invention, le palier comprend au moins un élément de positionnement angulaire coopérant avec une encoche du corps de stator.

La présente invention vise, selon un deuxième aspect, une installation domotique de fermeture ou de protection solaire comprenant un écran enroulable sur un tube d'enroulement entraîné en rotation par un actionneur électromécanique conforme à l'invention.

Cette installation domotique présente des caractéristiques et avantages analogues à ceux décrits précédemment en relation avec l'actionneur électromécanique tel que mentionné ci-dessus.

La présente invention vise, selon un troisième aspect, un procédé de fabrication d'un actionneur électromécanique tel que mentionné ci-dessus. Selon l'invention, ce procédé comprend au moins les étapes suivantes :
- insertion du joint élastique annulaire autour du palier,
- insertion du palier dans le logement annulaire du corps de stator,
- déformation plastique du corps de stator, de sorte à créer des zones de déformation formées sur la circonférence intérieure du corps de stator.

Ce procédé de fabrication d'un actionneur présente des caractéristiques et avantages analogues à ceux décrits précédemment en relation avec l'actionneur électromécanique selon l'invention.

D'autres particularités et avantages de l'invention apparaîtront encore dans la description ci-après, faite en référence aux dessins annexés, donnés à titre d'exemples non limitatifs :
- la figure 1 est une vue schématique en coupe d'une installation domotique conforme à un mode de réalisation de l'invention ;
- la figure 2 est une vue schématique en perspective de l'installation domotique illustrée à la figure 1 ;
- la figure 3 est une vue schématique en coupe d'un moteur électrique d'un actionneur électromécanique conforme à un mode de réalisation de l'invention pour une installation domotique telle qu'illustrée aux figures 1 et 2 ;
- la figure 4 est une vue en coupe en perspective du moteur de la figure 3 ;
- la figure 5 est une vue à plus grande échelle du détail V à la figure 3 illustrant le montage d'un premier palier et d'un joint élastique annulaire dans un premier logement annulaire d'un corps de rotor ;
- la figure 6 est une vue en perspective et en coupe du moteur des figures 3 à 5, passant par le plan de coupe VI-VI à la figure 3 ; et
- la figure 7 est une vue éclatée du moteur électrique illustré aux figures 3 à 6.

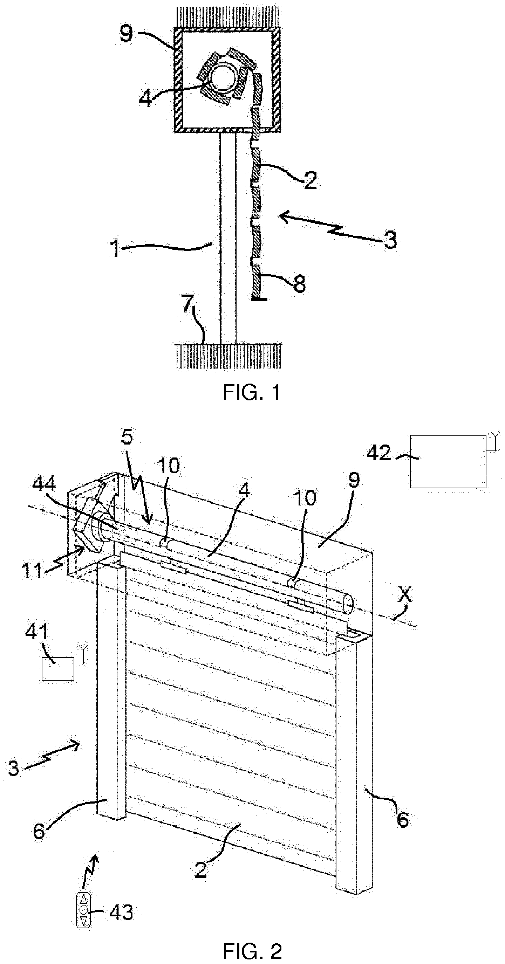

On va décrire tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. Bien entendu, la présente invention s'applique à tous les types de dispositif d'occultation.

On va décrire, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

Le dispositif d'entraînement motorisé 5 comprend un actionneur électromécanique 11, en particulier de type tubulaire, permettant de mettre en rotation le tube d'enroulement 4 de sorte à dérouler ou enrouler l'écran 2 du dispositif d'occultation 3.

Le dispositif d'occultation 3 comprend le tube d'enroulement 4 pour enrouler l'écran 2, où, dans l'état monté, l'actionneur électromécanique 11 est inséré dans le tube d'enroulement 4.

L'actionneur électromécanique 11 comprend un moteur électrique 12, un support de couple, et en outre notamment un dispositif de réduction à engrenages et un arbre de sortie.

L'actionneur électromécanique 11 comprend également un carter, préférentiellement de forme cylindrique.

De manière connue, un volet roulant 3 comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8 en forme de L du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du volet roulant 3, opposée à la lame d'extrémité, est reliée au tube d'enroulement 4 au moyen d'au moins une articulation 10.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

Le dispositif d'entraînement motorisé 5 est commandé par une unité de commande. L'unité de commande peut être par exemple une unité de commande locale 41, où l'unité de commande locale 41 peut être reliée en liaison filaire ou non filaire avec une unité de commande centrale 42. L'unité de commande centrale 42 pilote l'unité de commande locale 41, ainsi que d'autres unités de commande locales similaires et réparties dans le bâtiment.

L'unité de commande centrale 42 peut être en communication avec une station météorologique déportée à l'extérieur du bâtiment, incluant notamment un ou plusieurs capteurs pouvant être configurés pour déterminer par exemple une température, une luminosité, ou encore une vitesse de vent.

Une télécommande 43, pouvant être un type d'unité de commande locale, et pourvue d'un clavier de commande, qui comprend des moyens de sélection et d'affichage, permet en outre à un utilisateur d'intervenir sur l'actionneur électromécanique 11 et/ou l'unité de commande centrale 42.

Le dispositif d'entraînement motorisé 5 est, de préférence, configuré pour exécuter les commandes de déroulement ou d'enroulement de l'écran 2 du dispositif d'occultation 3, pouvant être émises notamment par la télécommande 43.

Des moyens de commande de l'actionneur électromécanique 11 conforme à l'invention, permettant le déplacement de l'écran 2 du dispositif d'occultation 3, sont constitués par au moins une unité électronique de contrôle 44. Cette unité électronique de contrôle 44 est apte à mettre en fonctionnement le moteur électrique 12 de l'actionneur électromécanique 11, et en particulier permettre l'alimentation en énergie électrique du moteur électrique 12.

Ainsi, l'unité électronique de contrôle 44 commande, notamment le moteur électrique 12, de sorte à ouvrir ou fermer l'écran 2, comme décrit précédemment.

L'unité électronique de contrôle 44 comprend également un module de réception d'ordres, en particulier d'ordres radioélectriques émis par un émetteur d'ordres tel que la télécommande 43 destinée à commander l'actionneur électromécanique 11.

Bien entendu, le module de réception d'ordres peut également permettre la réception d'ordres transmis par des moyens filaires.

Ici, et tel qu'illustré à la figure 2, l'unité électronique de contrôle 44 est disposée à l'intérieur d'un carter de l'actionneur électromécanique 11.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

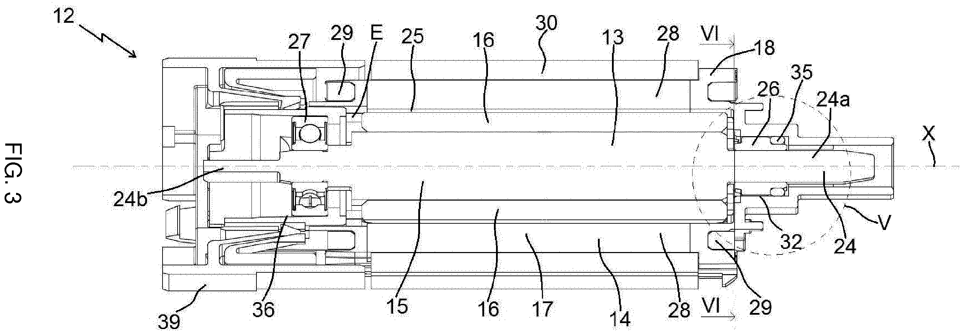

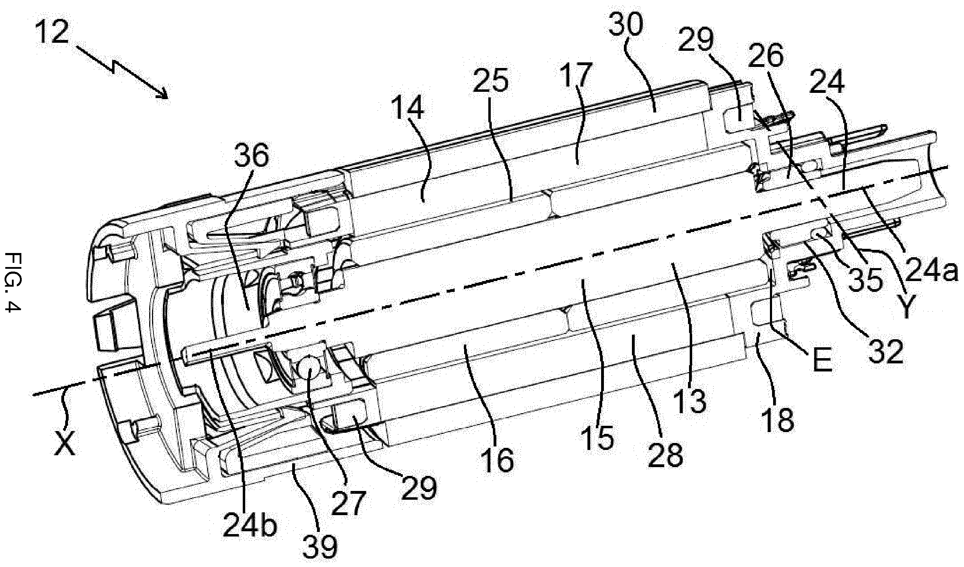

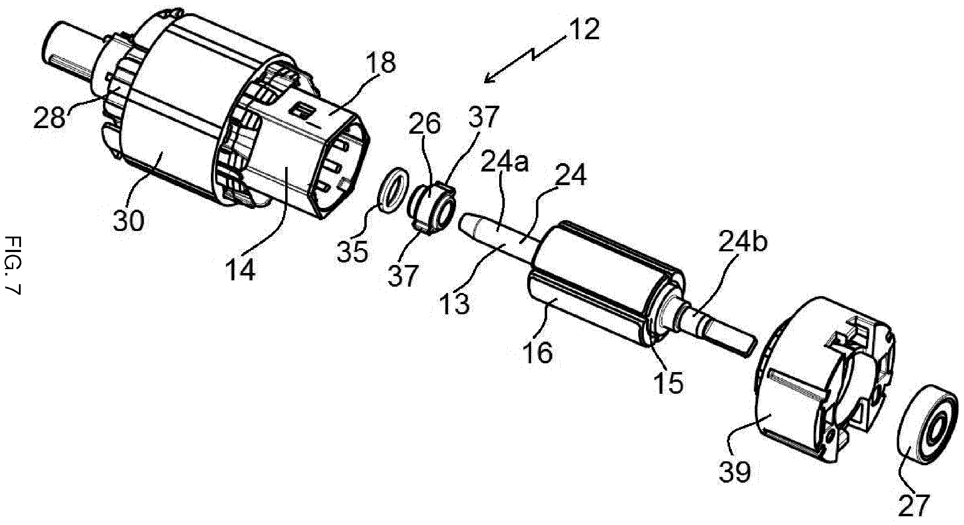

On va décrire à présent, en référence aux figures 3 à 7, un actionneur électromécanique conforme à l'invention.

L'actionneur électromécanique 11 est alimenté en énergie électrique par le réseau d'alimentation électrique du secteur. Il permet de déplacer l'écran 2 du dispositif d'occultation 3.

L'écran 2 mobile du dispositif d'occultation 3 est un écran de fermeture, d'occultation et/ou de protection solaire, s'enroulant sur le tube d'enroulement 4 dont le diamètre intérieur est sensiblement équivalent au diamètre externe de l'actionneur 11, de sorte que l'actionneur 11 puisse être inséré dans le tube d'enroulement 4 lors de l'assemblage du dispositif d'occultation 3.

Dans un autre mode de réalisation, l'actionneur 11 est destiné à être placé dans un rail profilé en U.

L'actionneur 11 comprend un moteur électrique 12. Le moteur 12 comprend un rotor 13 et un stator 14 positionnés de manière coaxiale autour d'un axe de rotation X.

Le rotor 13 comprend un corps de rotor 15 muni d'éléments magnétiques 16 entourés par le stator 14. Les éléments magnétiques 16 constituent des paires de pôles.

Avantageusement, les éléments magnétiques 16 sont disposés sur la circonférence extérieure du corps de rotor 15. Les éléments magnétiques 16 du rotor 13 constituent un aimant permanent.

Ainsi, l'aimant permanent formé par les éléments magnétiques 16 entoure le corps de rotor 15. L'aimant permanent est séparé du stator 14 par un entrefer 25, radial par rapport à l'axe de rotation X.

Les éléments magnétiques 16 séparés constituant l'aimant permanent peuvent être rapportés sur la circonférence extérieure du corps de rotor 15 par collage, surmoulage ou toute autre technique connue.

Le stator 14 est formé par un noyau de stator 17 comprenant des éléments polaires 28 répartis sur la périphérie du stator 14, préférentiellement sur la périphérie extérieure du stator 14.

Le stator 14 comprend également un corps de stator 18.

Le corps de rotor 15 est relié solidairement en rotation à un arbre de rotor 24. L'arbre de rotor 24 est centré sur l'axe de rotation X et dépasse de part et d'autre du corps de rotor 15.

Ainsi, l'arbre de rotor 24 comprend une première et une deuxième extrémités 24a, 24b en saillie par rapport au corps de rotor 15.

Ici, le moteur électrique 12 est de type à courant continu sans balais à commutation électronique.

Avantageusement, le corps de rotor 15 est formé à partir d'un empilage de tôle.

Dans un autre mode de réalisation, le corps de rotor 15 est réalisé par un arbre massif.

Le stator 14 définit un espace interne E cylindrique à section circulaire dans lequel le rotor 13, y compris notamment les éléments magnétiques 16, est positionné, et à l'intérieur duquel le rotor 13 est en rotation lorsque le moteur 12 fonctionne.

Le diamètre de l'espace cylindrique E est tel que cet espace E reçoit le rotor 13 ainsi que les éléments magnétiques 16. La partie magnétique ou magnétisée du rotor 13 se trouvant à l'intérieur de l'espace cylindrique E interne au stator 14, le rotor 13 est qualifié de rotor interne.

L'espace cylindrique E reçoit également un premier palier 26 et un deuxième palier 27 de support en rotation de l'arbre de rotor 24.

Ainsi, l'arbre de rotor 24 est monté en rotation au niveau de ses deux extrémités 24a et 24b par l'intermédiaire des deux paliers 26, 27.

Ici, la première extrémité 24a de l'arbre de rotor 24 est supportée par le premier palier 26, tandis que la deuxième extrémité 24b de l'arbre de rotor 24 est supportée par le deuxième palier 27.

Les premier et deuxième paliers 26, 27 sont ainsi positionnés de part et d'autre du corps de rotor 15 suivant l'axe de rotation X.

Ici et tel qu'illustré aux figures 3, 4 et 7, le premier palier 26 est un palier lisse, ou communément appelé coussinet, et de préférence réalisé dans un matériau autolubrifiant.

Le premier palier 26 est une pièce de révolution, et en particulier de forme cylindrique. Le premier palier comprend deux faces d'extrémité 26a, 26b, ces faces d'extrémité 26a, 26b étant orthogonales à l'axe de rotation X. Le premier palier 26 comprend également deux épaulements 26c, 26d, ces deux épaulements 26c, 26d étant disposés respectivement entre les deux faces d'extrémités 26a, 26b.

Ici, l'arbre de rotor 24, en particulier la première extrémité 24a de l'arbre de rotor 24, traverse le premier palier 26.

Le deuxième palier 27 comporte un organe de roulement monté avec un ajustement serré dans un deuxième logement annulaire 36 d'un support 39. Le support 39 est relié au corps de stator 18.

Ici, et tel qu'illustré aux figures 3, 4 et 7, le deuxième palier 27 est un roulement à billes.

Un noyau central est ici formé par le noyau de stator 17 appartenant au stator 14. Le noyau de stator 17 est en matériau magnétisable et plus spécifiquement en matériau ferromagnétique. Il est généralement formé par un empilage de tôles et muni de garnitures isolantes.

Les éléments polaires 28 du noyau 17 sont en saillie, radialement vers l'extérieur du moteur électrique 12, par rapport à l'axe de rotation X.

Des bobinages 29 sont positionnés autour des éléments polaires 28 du stator 14.

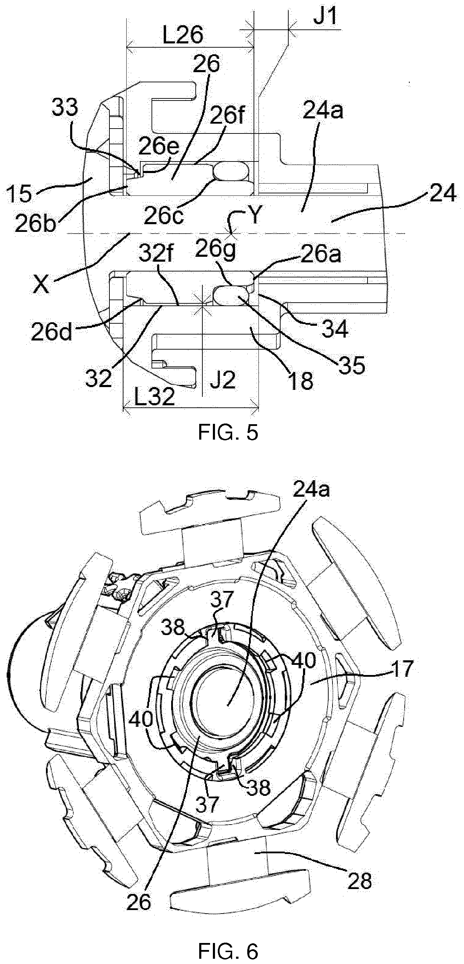

Plus précisément, chaque élément polaire 28 est entouré par un bobinage 29 qui lui est propre. Les bobinages 29 sont reliés de sorte que, lorsqu'ils sont parcourus par un courant, ils produisent un champ magnétique tournant qui entraîne en rotation le rotor 13. Les bobinages 29 sont isolés du noyau de stator 17, en particulier par le corps de stator 18. Pour la clarté du dessin, ces bobinages ne sont pas représentés à la figure 6.

Le stator 14 comprend, sur sa circonférence extérieure, une culasse 30. La culasse 30 entoure le stator 14, c'est-à-dire le noyau central 17, qui est propre à la recevoir, et est centrée sur l'axe de rotation X. Cette culasse 30 permet la circulation du flux magnétique.

Le corps de stator 18 comprend un premier logement annulaire 32 à l'intérieur duquel est disposé le premier palier 26.

Ici, le corps de stator 18 est réalisé en matière plastique, et en particulier par une opération de surmoulage du noyau de stator 17. Le premier logement annulaire 32 fait partie du corps de stator 18.

Le corps de stator 18 est relié au support 39, en particulier au moyen d'éléments d'encliquetage élastique.

Ici, le support 39 comprend le deuxième logement annulaire 36 à l'intérieur duquel est disposé le deuxième palier 27.

Dans un autre mode de réalisation non illustré, le deuxième logement annulaire 36 recevant le deuxième palier 27 est réalisé dans le corps de stator 18.

Le premier palier 26 est monté avec un ajustement libre à l'intérieur du premier logement annulaire 32 du corps de stator 18, cet ajustement libre comportant un premier jeu de fonctionnement axial J1 et un deuxième jeu de fonctionnement radial J2, tel qu'illustré à la figure 5.

Le premier jeu de fonctionnement axial J1 est réalisé par une différence entre, d'une part, une longueur axiale L32 mesurée le long de l'axe de rotation X, entre une première butée 33 et une deuxième butée 34 du premier logement annulaire 32 du corps de stator 18, et d'autre part, une longueur axiale L26 du premier palier 26, mesurée le long de cet axe de rotation X.

Et le deuxième jeu de fonctionnement radial J2 est réalisé entre une surface annulaire externe 26f du premier palier 26 et la surface annulaire 32f du premier logement annulaire 32 du corps de stator 15.

A titre d'exemple nullement limitatif, le premier jeu de fonctionnement axial J1 est de l'ordre de 0,1 à 0,4 millimètres, et le deuxième jeu de fonctionnement radial J2 est de l'ordre de 0,1 à 0,3 millimètres.

Le diamètre externe le plus grand du premier palier 26 est inférieur au diamètre interne du premier logement annulaire 32 du corps de stator 18.

Ici, et tel qu'illustré à la figure 5, la partie de diamètre externe le plus grand du premier palier 26 est disposé entre les deux épaulements 26c, 26d du premier palier 26.

Le premier palier 26 est ainsi disposé à l'intérieur du premier logement annulaire 32 de sorte à entourer celui-ci de manière périphérique selon une direction axiale et une direction radiale.

Le corps de stator 18 comprend ainsi un premier logement annulaire 32 à l'intérieur duquel est inséré un premier palier 26, où le premier palier 26 présente des dimensions lui permettant d'être mobile suivant les directions axiale et radiale à l'intérieur du premier logement annulaire 32.

Ici, le premier logement annulaire 32 à l'intérieur duquel est disposé le premier palier 26 est réalisé en un seul tenant lors de la fabrication du corps de stator 18. Et la deuxième butée 34 du premier logement annulaire 32 du corps de stator 18 est réalisée lors de la fabrication du corps de stator 18.

Dans ce mode de réalisation, le premier palier 26 comprend une première face 26e coopérant avec la première butée 33 du premier logement annulaire 32 du corps de stator 18, et une deuxième face 26a, opposée à la première face 26e, coopérant avec la deuxième butée 34 du premier logement annulaire 32 du corps de stator 18.

Ici, et tel qu'illustré à la figure 5, la première face 26e du premier palier 26 est réalisée par le deuxième épaulement 26d. Et la deuxième face 26a du premier palier 26 est une face frontale à une extrémité.

Un joint élastique annulaire 35 est disposé autour du premier palier 26.

Le joint élastique annulaire 35 est comprimé entre la surface annulaire 32f du premier logement annulaire 32 du corps de stator 18 et une surface annulaire externe 26g du premier palier 26.

Ainsi, le joint élastique annulaire 35 permet d'amortir la transmission de vibrations entre l'arbre de rotor 24 et le stator 14, ainsi qu'avec un arbre de sortie du moteur électrique 12.

De cette manière, l'amortissement des vibrations au moyen du joint élastique annulaire 35 permet de limiter l'usure des éléments constituant l'actionneur électromécanique 11 et de minimiser le bruit engendré par des vibrations au niveau du dispositif d'occultation 3 de l'installation domotique.

En outre, le joint élastique annulaire 35 permet de corriger l'alignement entre l'arbre de rotor 24 et le corps de stator 18.

De cette manière, la correction de l'alignement de l'arbre de rotor 24 au moyen du joint élastique annulaire 35 permet également de limiter l'usure des éléments constituant l'actionneur électromécanique 11 et de minimiser le bruit engendré par des vibrations au niveau du dispositif d'occultation 3 de l'installation domotique.

Le joint élastique annulaire 35 monté autour du premier palier 26 permet de réaliser une liaison de type rotule ente l'arbre de rotor 24 et le premier logement annulaire 32 du corps de stator 18.

Ainsi, le joint élastique annulaire 35 monté autour du premier palier 26 permet à l'arbre de rotor 24 d'être mobile en rotation autour d'un axe Y perpendiculaire à l'axe de rotation X et sécant avec celui-ci.

Par ailleurs, grâce au montage du premier palier 26 avec le joint élastique annulaire 35 à l'intérieur du premier logement annulaire 32 et à l'insertion de la première extrémité 24a de l'arbre de rotor 24 dans le premier palier 26, le deuxième palier 27 comprenant un organe de roulement peut être pourvu d'une bague intérieure à jeu de fonctionnement interne réduit, la bague intérieure du deuxième palier 27 coopérant avec la deuxième extrémité 24b de l'arbre de rotor 24.

Ainsi, l'utilisation d'un deuxième palier 27 comprenant une bague intérieure avec un jeu de fonctionnement interne réduit permet de minimiser le bruit de fonctionnement du moteur électrique 12, lors de l'entraînement en rotation du rotor 13 à l'intérieur du stator 14, en évitant des vibrations liées à un débattement de la deuxième extrémité 24b de l'arbre de rotor 24 à l'intérieur du deuxième palier 27.

En outre, l'utilisation d'un deuxième palier 27 comprenant une bague intérieure avec un jeu de fonctionnement interne réduit permet de réduire le coût d'obtention du moteur électrique 12.

Ici, le joint élastique annulaire 35 est un joint torique, et de préférence réalisé en élastomère, notamment en caoutchouc.

Dans un mode de réalisation, le joint élastique annulaire 35 présente une section droite de forme circulaire.

Bien entendu, la forme de la section du joint élastique annulaire 35 n'est nullement limitative, et peut être différente, et en particulier ovale ou carrée.

Ici, et tel qu'illustré aux figures 3 à 5, le joint élastique annulaire 35 monté autour du premier palier 26 est disposé entre le premier épaulement 26c du premier palier 26 et la face frontale d'extrémité 26a du premier palier 26.

Ainsi, le premier épaulement 26c du premier palier 26 permet de limiter la course de déplacement du joint élastique annulaire 35 le long du premier palier 26 lors de l'introduction du premier palier 26 à l'intérieur du premier logement annulaire 32.

En outre, le premier épaulement 26c du premier palier 26 forme un logement de retenue du joint élastique annulaire 35.

De cette manière, le logement de retenue du joint élastique annulaire 35 formé dans le premier palier 26 est réalisé de manière simple et peu onéreuse.

Par ailleurs, le premier épaulement 26c du premier palier 26 permet d'éviter le retrait du joint élastique annulaire 35, d'une part lié au jeu de fonctionnement axial J1 du premier palier 26 à l'intérieur du premier logement annulaire 32 du corps de stator 18, et d'autre part lié au jeu de fonctionnement radial J2 du premier palier 26 à l'intérieur du premier logement annulaire 32 du corps de stator 18.

Avantageusement, le diamètre de la section droite du joint élastique annulaire 35 est supérieur au jeu de fonctionnement axial J1 réalisé entre la deuxième face 26a du premier palier 26 et la deuxième butée 34 du premier logement annulaire 32 du corps de stator 18 de sorte à éviter le retrait du joint élastique annulaire 35 par rapport au premier épaulement 26c du premier palier 26.

Pratiquement, la partie du corps du premier palier 26 coopérant avec le joint élastique annulaire 35 est lisse, et en particulier de forme cylindrique.

Avantageusement, le joint élastique annulaire 35 est monté autour du premier palier 26 avec un ajustement libre.

Ainsi, l'assemblage du joint élastique annulaire 35 avec le premier palier 26 n'engendre aucune contrainte sur le joint élastique annulaire 35.

De cette manière, le joint élastique annulaire 35 est comprimé uniquement entre la surface annulaire 32f du premier logement annulaire 32 du corps de stator 18 et la surface annulaire externe 26g du premier palier 26 suite à l'insertion de l'ensemble formé par le joint élastique annulaire 35 et le premier palier 26 dans le premier logement annulaire 32 du corps de stator 18.

Par conséquent, l'élasticité du joint élastique annulaire 35 est utilisée en totalité pour limiter les vibrations du moteur électrique 12 lors de l'entraînement en rotation de l'arbre de rotor 24 et pour corriger l'alignement de l'arbre de rotor 24 à l'intérieur du corps de stator 18.

La première butée 33 du premier logement annulaire 32 du corps de stator 18 est formée par déformation plastique du corps de stator 18, suite à l'introduction du premier palier 26 à l'intérieur du premier logement annulaire 32 du corps de stator 18.

Ainsi, la première butée 33 du premier logement annulaire 32 du corps de stator 18 est réalisée de manière simple, rapide et peu onéreuse.

L'introduction d'un outil à l'intérieur du corps du stator 18 permet de former aisément la première butée 33 suite à l'introduction du palier 26 dans le premier logement annulaire 32 du corps de stator 18.

Ici, la déformation plastique du corps de stator 18 formant la première butée 33 du premier logement annulaire 32 du corps de stator 18 est réalisée dans quatre zones de déformation 40, de préférence uniformément réparties autour de l'axe de rotation X, comme visible à la figure 6.

Bien entendu, le nombre de zones de déformation du corps de stator formant la première butée du premier logement annulaire du corps de stator n'est nullement limitatif, et peut être différent, en particulier au moins de trois.

Les zones de déformation 40 du corps de stator 18 formant la première butée 33 du premier logement annulaire 32 du corps de stator 18 sont formées sur la circonférence intérieure du corps de stator 18.

Ainsi, la première face 26e du premier palier 26 réalisée par le deuxième épaulement 26d peut prendre appui contre les zones de déformation 40 du corps de stator 18 formant la première butée 33 du premier logement annulaire 32 du corps de stator 18.

Ici, les zones de déformation 40 du corps de stator 18 formant la première butée 33 du premier logement annulaire 32 du corps de stator 18 sont des zones de déformation locales.

Pratiquement, la déformation plastique du corps de stator 18 formant la première butée 33 du premier logement annulaire 32 du corps de stator 18 correspond à la formation d'une pluralité de saillies de matière du corps de stator 18, les saillies dépassant le diamètre extérieur du premier palier 26 en direction de l'axe de rotation X, de sorte à diminuer localement le diamètre du premier logement annulaire 32 du corps de stator 18.

Ainsi, les saillies constituant la première butée 33 du premier logement annulaire 32 du corps de stator 18 permettent d'empêcher le retrait du premier palier 26 du premier logement annulaire 32 du corps de stator 18 suivant une direction axiale.

En outre, la déformation plastique du corps de stator 18 formant la première butée 33 du premier logement annulaire 32 du corps de stator 18 permet de garantir le maintien du joint élastique annulaire 35 sur le premier épaulement 26c du premier palier 26.

De cette manière, le joint élastique annulaire 35 est maintenu dans le logement de retenue formé par le premier épaulement 26c du premier palier 26 bien que le premier palier 26 puisse se déplacer à l'intérieur du premier logement annulaire 32 du corps de stator 18 entre les première et deuxième butées 33, 34 suivant une direction axiale.

Avantageusement, l'ensemble des zones de déformation 40 est réalisé en même temps.

Ainsi, la déformation plastique du corps de stator 18 est obtenue au moyen d'un outil écrasant localement de la matière du corps de stator 18 de manière simultanée au niveau de plusieurs zones de déformation 40. Chaque zone de déformation 40 est obtenue par un poinçon respectif.

De cette manière, la première butée 33 du premier logement annulaire 32 du corps de stator 18 est réalisée de manière simple, rapide et peu onéreuse.

Préférentiellement, la première butée 33 du logement annulaire 32 du corps de stator 18 coopère avec le deuxième épaulement 26d du premier palier 26.

Dans un mode de réalisation non illustré, un deuxième joint élastique annulaire peut être disposé entre la première butée 33 du premier logement annulaire 32 du corps de stator 18 et le deuxième épaulement 26d du premier palier 26.

Ainsi, l'ajout d'un deuxième joint élastique annulaire autour du premier palier 26, en particulier entre la première butée 33 du premier logement annulaire 32 du corps de stator 18 et le deuxième épaulement 26d du premier palier 26, permet d'améliorer l'amortissement de vibrations entre la première extrémité 24a de l'arbre de rotor 24 et le stator 14.

Dans un tel cas, la première butée 33 du logement annulaire 32 du corps de stator 18 peut coopérer avec la deuxième face d'extrémité 26b du premier palier 26.

Avantageusement, la deuxième butée 34 du premier logement annulaire 32 du corps de stator 18 est formée par une paroi d'extrémité du premier logement annulaire 32 du corps de stator 18.

Préférentiellement, le premier palier 26 comprend au moins un élément de positionnement angulaire 37 coopérant avec une encoche 38 du corps de stator 18.

Ainsi, le premier palier 26 est bloqué en rotation par rapport au corps de stator 18 de sorte à ne pas être entraîné en rotation avec l'arbre de rotor 24.

Ici, et tel qu'illustré à la figure 6, le premier palier 26 comprend deux éléments de positionnement angulaire 37 coopérant respectivement avec une encoche 38 du corps de stator 18.

On va décrire à présent un procédé de fabrication d'un actionneur électromécanique conforme à un mode de réalisation de l'invention.

Le procédé de fabrication comprend au moins les étapes suivantes, de préférence exécutées dans l'ordre mentionné :
- insertion du joint élastique annulaire 35 autour du premier palier 26,
- insertion du premier palier 26 dans le premier logement annulaire 32 du corps de stator 18,
- déformation plastique du corps de stator 18, de sorte à créer des zones de déformation 40 formées sur la circonférence intérieure du corps de stator 18.

Le procédé de fabrication comprend également une étape d'insertion du rotor 13 à l'intérieur du corps de stator 18, où la première extrémité 24a de l'arbre de rotor 24 est insérée dans le premier palier 26.

Puis, le procédé de fabrication comprend une étape d'insertion du deuxième palier 27 dans le deuxième logement annulaire 36 du support 39.

Ensuite, le procédé de fabrication comprend une étape d'insertion du deuxième palier 27 sur la deuxième extrémité 24b de l'arbre de rotor 24.

Et dans un même temps, le procédé de fabrication comprend une étape de fixation du support 39 sur le corps de stator 18, en particulier au moyen d'éléments d'encliquetage élastique.

Grâce à la présente invention, l'actionneur électromécanique 11 comprend un moteur électrique 12 pourvu d'un stator 14 à l'intérieur duquel est mis en rotation un rotor 13, où le rotor comporte un arbre de rotor 24 supporté par un palier 26, et où un joint élastique annulaire 35 est monté entre le palier et le logement annulaire 32 recevant le palier de sorte à limiter les vibrations du moteur électrique lors de l'entraînement en rotation de l'arbre de rotor et à corriger l'alignement de l'arbre de rotor à l'intérieur du corps de stator, tout en minimisant les coûts de fabrication du moteur électrique d'un actionneur électromécanique.

Bien entendu, de nombreuses modifications peuvent être apportées aux exemples de réalisation décrits précédemment sans sortir du cadre de l'invention.

En particulier, le deuxième palier peut être un palier lisse.

Ce deuxième palier lisse peut également être monté autour d'un joint élastique annulaire, tel que décrit précédemment pour le premier palier.

Dans ce mode de réalisation, le montage du deuxième palier avec un joint élastique annulaire dans le deuxième logement annulaire du support du moteur électrique permet également de diminuer le coût de fabrication du moteur électrique, d'amortir la transmission de vibrations entre la deuxième extrémité de l'arbre de rotor et le stator, et de corriger l'alignement entre la deuxième extrémité de l'arbre de rotor et le corps de stator.

En outre, dans un mode de réalisation, le rotor peut comprendre un arbre de rotor creux à l'intérieur duquel est disposé le noyau de stator. Le corps de stator comprend une partie à l'intérieur de l'arbre de rotor et une autre partie entourant l'extérieur de l'arbre de rotor. Et le corps de stator comprend un premier logement annulaire à l'intérieur duquel est disposé un premier palier. Un joint élastique annulaire est disposé autour du premier palier. Le joint élastique annulaire est comprimé entre la surface annulaire du logement annulaire du corps de stator et une surface annulaire externe du premier palier. La première butée du logement annulaire du corps de stator est formée par déformation plastique du corps de stator. Le corps de stator est réalisé de préférence en matière plastique. Et l'arbre de rotor comprend une extrémité disposée à l'intérieur du premier palier.

## Revendications

1. Actionneur électromécanique (11) pour une installation domotique de fermeture ou de protection solaire comprenant un moteur électrique (12), le moteur électrique (12) comprenant un rotor (13) et un stator (14) positionnés de manière coaxiale autour d'un axe de rotation (X),
- où le rotor (13) comprend un arbre de rotor (24), l'arbre de rotor (24) comportant une extrémité (24a) supportée par un palier (26),
- où le stator (14) comprend un noyau de stator (17) et un corps de stator (18), le corps de stator (18) comprenant un logement annulaire (32) à l'intérieur duquel est disposé le palier (26),
**caractérisé en ce que** le palier (26) est monté avec un ajustement libre à l'intérieur du logement annulaire (32) du corps de stator (18), l'ajustement libre étant défini par :
oun premier jeu de fonctionnement axial (J1), le premier jeu de fonctionnement axial (J1) étant réalisé par une différence entre, d'une part, une longueur axiale (L32) mesurée le long de l'axe de rotation (X), entre une première butée (33) et une deuxième butée (34) du logement annulaire (32) du corps de stator (18) et, d'autre part, une longueur axiale (L26) du palier (26), et
oun deuxième jeu de fonctionnement radial (J2), le deuxième jeu de fonctionnement radial (J2) étant réalisé entre une surface annulaire externe (26f) du palier (26) et la surface annulaire (32f) du logement annulaire (32) du corps de stator (18),
**en ce qu'**un joint élastique annulaire (35) est disposé autour du palier (26), le joint élastique annulaire (35) étant comprimé entre la surface annulaire (32f) du logement annulaire (32) du corps de stator (18) et une surface annulaire externe (26g) du palier (26),
et **en ce que** la première butée (33) du logement annulaire (32) du corps de stator (18) est formée par déformation plastique du corps de stator (18).

2. Actionneur électromécanique (11) pour une installation domotique de fermeture ou de protection solaire selon la revendication 1, **caractérisé en ce que** le corps du stator (18) est réalisé en matière plastique.

3. Actionneur électromécanique (11) pour une installation domotique de fermeture ou de protection solaire selon la revendication 1 ou la revendication 2, **caractérisé en ce que** la deuxième butée (34) du logement annulaire (32) du corps de stator (18) est formée par une paroi d'extrémité du logement annulaire (32) du corps de stator (18).

4. Actionneur électromécanique (11) pour une installation domotique de fermeture ou de protection solaire selon l'une quelconque des revendications 1 à 3, **caractérisé en ce que** le joint élastique annulaire (35) monté autour du palier (26) est disposé entre un épaulement (26c) du palier (26) et une face frontale d'extrémité (26a) du palier (26).

5. Actionneur électromécanique (11) pour une installation domotique de fermeture ou de protection solaire selon l'une quelconque des revendications 1 à 4, **caractérisé en ce que** la première butée (33) du logement annulaire (32) du corps de stator (18) coopère avec un épaulement (26d) du palier (26).

6. Actionneur électromécanique (11) pour une installation domotique de fermeture ou de protection solaire selon l'une quelconque des revendications 1 à 5, **caractérisé en ce que** l'arbre de rotor (24) comporte une autre extrémité (24b) supportée par un autre palier (27), l'autre palier (27) comportant un organe de roulement, et **en ce qu'**un support (39) comprend un autre logement annulaire (36) à l'intérieur duquel est disposé l'autre palier (27), le support (39) étant relié au corps de stator (18).

7. Actionneur électromécanique (11) pour une installation domotique de fermeture ou de protection solaire selon l'une quelconque des revendications 1 à 6, **caractérisé en ce que** le joint élastique annulaire (35) est monté autour du palier (26) avec un ajustement libre.

8. Actionneur électromécanique (11) pour une installation domotique de fermeture ou de protection solaire selon l'une quelconque des revendications 1 à 7, **caractérisé en ce que** le palier (26) comprend au moins un élément de positionnement angulaire (37) coopérant avec une encoche (38) du corps de stator (18).

9. Installation domotique de fermeture ou de protection solaire comprenant un écran (2) enroulable sur un tube d'enroulement (4) entraîné en rotation par un actionneur électromécanique (11), **caractérisée en ce que** l'actionneur (11) est conforme à l'une quelconque des revendications 1 à 8.

10. Procédé de fabrication d'un actionneur électromécanique (11) pour une installation domotique de fermeture ou de protection solaire selon l'une quelconque des revendications 1 à 8, **caractérisé en ce que** ledit procédé comprend au moins les étapes suivantes :
- insertion du joint élastique annulaire (35) autour du palier (26),
- insertion du palier (26) dans le logement annulaire (32) du corps de stator (18),
- déformation plastique du corps de stator (18) de sorte à créer des zones de déformation (40) formées sur la circonférence intérieure du corps de stator (18).

## Patentansprüche

1. Elektromechanisches Betätigungselement (11) für eine Hausautomation einer Schließ- oder Sonnenschutzeinrichtung, umfassend einen Elektromotor (12), wobei der Elektromotor (12) einen Rotor (13) und einen Stator (14) aufweist, welche koaxial um eine Rotationsachse (X) angeordnet sind,
- wobei der Rotor (13) eine Rotorwelle (24) umfasst, welche ein Ende (24a) aufweist, das von einem Lager (26) gestützt wird,
- wobei der Stator (14) einen Statorkern (17) und einen Statorkörper (18) aufweist, wobei der Statorkörper (18) eine ringförmige Aufnahme (32), in deren Innerem das Lager (26) angeordnet ist, aufweist, **dadurch gekennzeichnet, dass** das Lager (26) mit einer Spielpassung im Inneren der ringförmigen Aufnahme (32) des Statorkörpers (18) angeordnet ist, wobei die Spielpassung definiert ist durch:
- ein erstes axiales Betriebsspiel (J1), wobei sich das erste axiale Betriebsspiel (J1) aus einer Differenz zwischen einer axialen Länge (L32) einerseits, welche entlang der Rotationsachse (X) zwischen einem ersten Anschlag (33) und einem zweiten Anschlag der ringförmigen Aufnahme (32) des Statorkörpers (18) gemessen wird, und einer axialen Länge (L26) des Lagers (26) andererseits ergibt, und
- ein zweites axiales Betriebsspiel (J2), wobei das zweite axiale Betriebsspiel (J2) zwischen einer äußeren ringförmigen Oberfläche (26f) des Lagers (26) und der ringförmigen Oberfläche (32f) der ringförmigen Aufnahme (32) des Statorkörpers (18) ausgebildet ist, dass eine elastische ringförmige Dichtung (35) um das Lager (26) herum angeordnet ist, wobei die elastische ringförmige Dichtung (35) zwischen der ringförmigen Oberfläche (32f) der ringförmigen Aufnahme (32) des Statorkörpers (18) und einer äußeren ringförmigen Oberfläche (26g) des Lagers (26) komprimiert ist,
und dass der erste Anschlag (33) der ringförmigen Aufnahme (32) des Statorkörpers (18) durch eine plastische Verformung des Statorkörpers (18) ausgebildet ist.

2. Elektromechanisches Betätigungselement (11) für eine Hausautomation einer Schließ- oder Sonnenschutzeinrichtung nach Anspruch 1, **dadurch gekennzeichnet, dass** der Statorkörper (18) aus Kunststoffmaterial hergestellt ist.

3. Elektromechanisches Betätigungselement (11) für eine Hausautomation einer Schließ- oder Sonnenschutzeinrichtung nach Anspruch 1 oder Anspruch 2, **dadurch gekennzeichnet, dass** der zweite Anschlag (34) der ringförmigen Aufnahme (32) des Statorkörpers (18) von einer endseitigen Wandung der ringfömigen Aufnahme (32) des Statorkörpers (18) gebildet ist.

4. Elektromechanisches Betätigungselement (11) für eine Hausautomation einer Schließ- oder Sonnenschutzeinrichtung nach einem der Ansprüche 1 bis 3, **dadurch gekennzeichnet, dass** die elastische ringförmige Dichtung (35), welche um das Lager (26) herum angeordnet ist, zwischen einem Absatz (26c) des Lagers (26) und einer endseitigen Stirnfläche (26a) des Lagers (26) angeordnet ist.

5. Elektromechanisches Betätigungselement (11) für eine Hausautomation einer Schließ- oder Sonnenschutzeinrichtung nach einem der Ansprüche 1 bis 4, **dadurch gekennzeichnet, dass** der erste Anschlag (33) der ringförmigen Aufnahme (32) des Statorkörpers (18) mit einem Absatz (26d) eines Lagers (26) zusammenwirkt.

6. Elektromechanisches Betätigungselement (11) für eine Hausautomation einer Schließ- oder Sonnenschutzeinrichtung nach einem der Ansprüche 1 bis 5, **dadurch gekennzeichnet, dass** die Rotorwelle (24) ein weiteres Ende (24b) aufweist, welches von einem weiteren Lager (27) gestützt ist, wobei das weitere Lager ein Rollelement aufweist, und dass eine Halterung (39) eine weitere ringförmige Aufnahme (36) aufweist, in deren Innerem das weitere Lager (27) aufgenommen ist, wobei die Halterung (39) mit dem Statorkörper (18) verbunden ist.

7. Elektromechanisches Betätigungselement (11) für eine Hausautomation einer Schließ- oder Sonnenschutzeinrichtung nach einem der Ansprüche 1 bis 6, **dadurch gekennzeichnet, dass** die elastische ringförmige Dichtung (35) mit einer Spielpassung um das Lager (26) herum angeordnet ist.

8. Elektromechanisches Betätigungselement (11) für eine Hausautomation einer Schließ- oder Sonnenschutzeinrichtung nach einem der vorhergehenden Ansprüche 1 bis 7, **dadurch gekennzeichnet, dass** das Lager (26) mindestens ein Winkelpositionierungselement (37) umfasst, welches mit einer Aussparung (38) des Statorkörpers (18) zusammenwirkt.

9. Hausautomation einer Schließ- oder Sonnenschutzeinrichtung, umfassend eine Schutzabdeckung (2), die auf eine Wickelhülse (4) aufrollbar ist, welche durch ein elektromechanisches Betätigungselement (11) rotatorisch antreibbar ist, **dadurch gekennzeichnet, dass** das Betätigungselement (11) gemäß einem der Ansprüche 1 bis 8 ausgebildet ist.

10. Verfahren zur Herstellung eines elektromechanischen Betätigungselements (11) für eine Hausautomation einer Schließ- oder Sonnenschutzeinrichtung nach einem der Ansprüche 1 bis 8, **dadurch gekennzeichnet, dass** das Verfahren zumindest die folgenden Schritte umfasst:
- Einsetzen der elastischen ringförmigen Dichtung (35) um das Lager (26) herum,
- Einsetzen des Lagers (26) in die ringförmige Aufnahme (32) des Statorkörpers (18),
- plastische Verformung des Statorkörpers (18), um Verformungsbereiche (40) zu erzeugen, welche an dem inneren Umfang des Statorkörpers (18) ausgebildet sind.

## Claims

1. An electromechanical actuator (11) for a home automation closing or sun protection installation comprising an electric motor (12), the electric motor (12) comprising a rotor (13) and a stator (14) positioned coaxially around an axis of rotation (X),
- where the rotor (13) comprises a rotor shaft (24), the rotor shaft (24) comprising one end (24a) supported by a bearing (26),
- where the stator (14) comprises a stator core (17) and a stator body (18), the stator body (18) comprising an annular housing (32) inside which the bearing is positioned (26),
**characterized in that** the bearing (26) is mounted with a free adjustment inside the annular housing (32) of the stator body (18), the free adjustment being defined by:
∘a first axial operating play (J1), the first axial operating play (J1) being produced by a difference between an axial length (L32), measured along the axis of rotation (X), between a first stop (33) and a second stop (34) of the annular housing (32) of the stator body (18), on the one hand, and an axial length (L26) of the bearing (26) on the other hand, and
∘a second radial operating play (J2), the second radial operating play (J2) being produced between an outer annular surface (26f) of the bearing (26) and the annular surface (32f) of the annular housing (32) of the stator body (18),
**in that** an annular elastic seal (35) is positioned around the bearing (26), the annular elastic seal (35) being compressed between the annular surface (32f) of the annular housing (32) of the stator body (18) and an outer annular surface (26g) of the bearing (26),
and **in that** the first stop (33) of the annular housing (32) of the stator body (18) is formed by plastic deformation of the stator body (18).

2. The electromechanical actuator (11) for a home automation closing or sun protection installation according to claim 1, **characterized in that** the body of the stator (18) is made from plastic.

3. The electromechanical actuator (11) for a home automation closing or sun protection installation according to claim 1 or claim 2, **characterized in that** the second stop (34) of the first annular housing (32) of the stator body (18) is formed by an end wall of the first annular housing (32) of the stator body (18).

4. The electromechanical actuator (11) for a home automation closing or sun protection installation according to any one of claims 1 to 3, **characterized in that** the annular elastic seal (35) mounted around the bearing (26) is positioned between the shoulder (26c) of the bearing (26) and a front end face (26a) of the bearing (26).

5. The electromechanical actuator (11) for a home automation closing or sun protection installation according to any one of claims 1 to 4, **characterized in that** the first stop (33) of the annular housing (32) of the stator body (18) cooperates with a shoulder (26d) of the bearing (26).

6. The electromechanical actuator (11) for a home automation closing or sun protection installation according to any one of claims 1 to 5, **characterized in that** the rotor shaft (24) comprises another end (24b) supported by another bearing (27), the other bearing (27) comprising a rolling member, and **in that** a support (39) comprises another annular housing (36) inside which the other bearing (27) is positioned, the support (39) being connected to the stator body (18).

7. The electromechanical actuator (11) for a home automation closing or sun protection installation according to any one of claims 1 to 6, **characterized in that** the annular elastic seal (35) is mounted around the first bearing (26) with a free adjustment.

8. The electromechanical actuator (11) for a home automation closing or sun protection installation according to any one of claims 1 to 7, **characterized in that** the bearing (26) comprises at least one angular positioning element (37) cooperating with a notch (38) of the stator body (18).

9. A home automation installation for closing or providing sun protection that comprises a screen (2) able to be wound on a winding tube (4) rotated by an electromechanical actuator (11), **characterized in that** the actuator (11) is according to any one of claims 1 to 8.

10. A method for manufacturing an electromechanical actuator (11) for a home automation closing or sun protection installation according to any one of claims 1 to 8, **characterized in that** said method comprises at least the following steps:
- inserting the annular elastic seal (35) around the first bearing (26),
- inserting the first bearing (26) in the first annular housing (32) of the stator body (18),
- plastically deforming the stator body (18), so as to create deformation zones (40) formed on the inner circumference of the stator body (18).
